# EUROPÄISCHE PATENTSCHRIFT

(11) **EP 3 356 220 B1**
(45) Veröffentlichungstag und Bekanntmachung des Hinweises auf die Patenterteilung: **08.07.2020**
(21) Anmeldenummer: 16784131.1
(22) Anmeldetag: 19.09.2016
(51) Int. Cl.: B63G 8/00, G05D 1/02

(54) **VERFAHREN ZUM EINHOLEN EINES UNTERWASSERFAHRZEUGES BEGLEITFAHRZEUG UND FAHRZEUGKOMBINATION**
METHOD FOR RETRIEVING AN UNDERWATER VEHICLE, ESCORT VEHICLE AND A VEHICLE COMBINATION
PROCÉDÉ DE RÉCUPÉRATION D'UN VÉHICULE SOUS-MARIN, VÉHICULE AUXILIAIRE ET COMBINAISON DE VÉHICULES

(30) Priorität: 02.10.2015 DE 102015116758
(43) Veröffentlichungstag der Anmeldung: 08.08.2018
(73) Patentinhaber: ATLAS ELEKTRONIK GmbH, 28309 Bremen (DE)
(72) Erfinder: ABILDGAARD, Max, 28205 Bremen (DE)
(74) Vertreter: thyssenkrupp Intellectual Property GmbH
(86) Internationale Anmeldenummer: PCT/DE2016/100436
(87) Internationale Veröffentlichungsnummer: WO 2017/054796

(56) Entgegenhaltungen:
- DE-A1-102012 008 074
- FR-A1- 2 926 901
- JP-A- 2009 208 511
- US-A1- 2012 167 814
- US-B1- 8 145 369

## Beschreibung

Die Erfindung betrifft ein Verfahren zum Einholen eines Unterwasserfahrzeuges mittels eines Begleitfahrzeuges, wobei das Unterwasserfahrzeug einen Schallempfänger und eine Navigationseinheit aufweist und dem Begleitfahrzeug ein Schallsender zugeordnet ist oder das Unterwasserfahrzeug einen Schallsender aufweist. Des Weiteren betrifft die Erfindung ein Begleitfahrzeug und eine Fahrzeugkombination.

Üblicherweise wird ein Unterwasserfahrzeug von einem Begleitfahrzeug in einem Einsatzgebiet im Wasser ausgesetzt, um seine Aufgabe, beispielsweise eine Erkundung, durchzuführen. Nach Beendigung des Einsatzes und/oder zwischendurch zu Wartungs- und Einrichtungszwecken muss ein Unterwasserfahrzeug wieder an Deck des Begleitfahrzeuges gebracht werden.

Das Aussetzen und Einholen eines Unterwasserfahrzeuges erfolgt üblicherweise mittels Lasthebeanlagen vom Deck des Begleitschiffes aus. Dazu werden schwenkbare Ausleger und/oder Kräne sowie Tragekäfige und/oder Rahmen verwendet. Auch kann ein Unterwasserfahrzeug heckseitig über eine Rampe ins Wasser herabgelassen oder aus dem Wasser herausgeholt werden. Nachteilig bei Einholverfahren nach dem Stand der Technik ist, dass das Unterwasserfahrzeug in der Nähe des Begleitfahrzeuges "schlingert", da dieses der Umströmung und Wellenbewegung um das Begleitfahrzeug ausgesetzt ist. Befindet sich das Begleitfahrzeug in Fahrt, so ist insbesondere ein heckseitiges Einholen aufgrund der Propellerbewegung und der entsprechenden Heckwelle des Begleitfahrzeuges nur sehr schwer möglich.

Zudem ist das Einholen bei starkem Wellengang und/oder starkem Wind ein sehr schwieriges und gefährliches Manöver. Folglich kann das Unterwasserfahrzeug keine stabile Lage beim Einholen durch das Begleitfahrzeug einnehmen.

Aufgabe der Erfindung ist es, den Stand der Technik zu verbessern.

Gelöst wird die Aufgabe durch ein Verfahren zum Einholen eines Unterwasserfahrzeuges mittels eines Begleitfahrzeuges, wobei das Unterwasserfahrzeug einen Schallempfänger und eine Navigationseinheit aufweist und dem Begleitfahrzeug ein Schallsender zugeordnet ist oder das Unterwasserfahrzeug einen Schallsender aufweist, wobei
- ein Schallsignal von dem Schallsender ausgesendet wird,
- das Unterwasserfahrzeug mittels des Schallempfängers das ausgesendete Schallsignal empfängt,
- das Unterwasserfahrzeug anhand des empfangenen Schallsignals einen aktuellen seitlichen Abstand zu einem Referenzpunkt ermittelt, welcher dem Begleitfahrzeug eindeutig zuordenbar ist, wobei der Referenzpunkt steuerbord- oder backbordseitig in Bezug zu einer Längsachse des Begleitfahrzeuges angeordnet ist,
- das Unterwasserfahrzeug eine Abweichung von dem ermittelten aktuellen seitlichen Abstand zu einem Zielabstand ermittelt,
- das Unterwasserfahrzeug sich mittels der Navigationseinheit anhand der ermittelten Abweichung dem Zielabstand annähert und
- nach Erreichen des Zielabstandes das Unterwasserfahrzeug den Zielabstand hält und im Falle eines Versatzes in Richtung der Längsachse des Begleitfahrzeuges sich parallel zur Richtung der Längsachse des Begleitfahrzeuges bis zum Erreichen einer Einholposition fortbewegt, sodass bei dem Unterwasserfahrzeug exakt ein Annähern an die Einholposition und ein Halten der erreichten Einholposition kontrollierbar und korrigierbar ist.

Somit kann durch Einstellung eines seitlichen Abstandes zu einem dem Begleitfahrzeug zugeordneten Referenzpunkt eine sehr stabile Lage des Unterwasserfahrzeuges beim Annähern an das Begleitfahrzeug zum anschließenden Einholen erreicht werden. Dadurch wird insbesondere ein "Schlingern" des Unterwasserfahrzeuges im Nahbereich des Begleitfahrzeuges verhindert.

Zudem können Abweichungen zwischen dem aktuellen seitlichen Abstand des Unterwasserfahrzeuges zu einem Zielabstand ermittelt und korrigiert werden, sodass sich das Unterwasserfahrzeug sehr exakt dem Begleitfahrzeug annähern und eine exakt vorgegebene Einholposition einhalten kann.

Somit wird ein Verfahren bereitgestellt, bei dem das Unterwasserfahrzeug exakt sein Annähern an die Einholposition und Halten der erreichten Einholposition kontrollieren und korrigieren kann.

Ein wesentlicher Gedanke der Erfindung beruht darauf, dass das Unterwasserfahrzeug ein ausgesandtes Schallsignal empfängt und dadurch seinen aktuellen seitlichen Abstand zu einem dem Begleitfahrzeug zuordenbaren Referenzpunkt ermittelt und korrigiert, sodass sich das Unterwasserfahrzeug der seitlich zur Längsachse des Begleitfahrzeugs gelegenen Einholposition annähert und im Falle einer Abweichung in Längsrichtung des Begleitfahrzeuges sich unter Einhaltung des seitlichen Abstands längsseitig bis zur Einholposition fortbewegt, welche es durch weitere kontinuierliche Abstandsmessungen halten kann, bis es von dem Begleitfahrzeug eingeholt wird.

Bei diesem Verfahren zum Einholen kann das Unterwasserfahrzeug den Schallsender aufweisen, wobei das ausgesendete Schallsignal an der Bordwand des Begleitfahrzeuges reflektiert und das reflektierte Schallsignal vom Unterwasserfahrzeug zur Ermittlung des aktuellen seitlichen Abstandes zu einem dem Begleitfahrzeug zugeordneten Referenzpunkt verwendet wird. In diesem Fall ist der Referenzpunkt die Bordwand des Begleitfahrzeuges an der Stelle der Reflexion.

Ebenso kann das Begleitfahrzeug einen Schallsender aufweisen, wobei das ausgesandte Schallsignal von dem Schallempfänger des Unterwasserfahrzeuges empfangen wird. In diesem Fall ist der Referenzpunkt die Position des Schallsenders des Begleitfahrzeuges.

### Folgendes Begriffliche sei erläutert:

Unter "Einholen" (auch "Bergen") wird insbesondere das Verbringen eines Unterwasserfahrzeuges aus dem Wasser an Bord eines Begleitfahrzeuges und/oder einer Trägerplattform verstanden. Das Einholen kann insbesondere mittels Lasthebeanlagen, Auslegern, Kränen, Winden, Tragekäfigen, Rahmen und/oder Haken und/oder durch Greifen in eine oder mehrere Ösen des Unterwasserfahrzeuges erfolgen. Das Einholen erfolgt insbesondere heckseitig und/oder seitlich vom Begleitfahrzeug, wobei insbesondere das Unterwasserfahrzeug an Deck gehoben wird.

Bei einem "Unterwasserfahrzeug" handelt es sich insbesondere um ein Fahrzeug, welches bemannt oder unbemannt ist und sich autonom oder ferngesteuert unter Wasser bewegt. Ein Unterwasserfahrzeug ist insbesondere ein autonomes Unterwasserfahrzeug (AUV, Autonomous Underwater Vehicle) oder ein ferngesteuertes Unterwasserfahrzeug (ROV, Remotely Operated Vehicle) und/oder ein Unterwassergleiter. Ein Unterwasserfahrzeug weist insbesondere einen eigenen Antrieb, insbesondere einen elektromotorischen Antrieb, auf oder wird über ein Kabel mit Antriebenergie extern versorgt.

Ein "Begleitfahrzeug" (auch "Trägerschiff" oder "Versorgungsschiff") ist insbesondere ein Überwasserschiff oder eine Trägerplattform. Bei einem Begleitfahrzeug kann es sich auch um ein Unterwasserfahrzeug, wie beispielsweise ein U-Boot, handeln. Das Begleitfahrzeug kann sich insbesondere schwebend oder fahrend im und/oder auf dem Wasser aufhalten. Das Begleitfahrzeug weist insbesondere eine Einholvorrichtung für ein Unterwasserfahrzeug auf.

Ein "Schallempfänger" ist insbesondere ein Gerät zum Empfangen von akustischen Unterwasserschallsignalen. Der Schallempfänger empfängt Unterwasserschallsignale und wandelt diese in ein elektrisches Signal zur Weiterverarbeitung um. Beispielsweise werden als Schallempfänger Hydrophone unter Wasser eingesetzt, um dort Unterwasserschallgeräusche aufzunehmen. Hierbei wandelt ein Hydrophon den Wasserschall in eine dem Schalldruck entsprechende elektrische Größe. Bei Einsatz unter Wasser wird insbesondere ein Frequenzbereich zwischen ca. 10Hz und 1MHz verwendet. Ein Schallempfänger wird insbesondere in einem aktiven und/oder passiven Sonar eingesetzt.

Eine "Navigationseinheit" (auch "Navigationssystem") ist insbesondere ein technisches System zur Berechnung und/oder Bestimmung einer Position und eines Kurses zum Ziel eines Unterwasserfahrzeuges. Insbesondere ermöglicht eine Navigationseinheit mit Hilfe von Positionsbestimmung (Satellit, Funk und ähnliches) und/oder Geoinformationen (Topologie- und/oder Seekarten) das Annähern an einen gewählten Ort und/oder eine Route des Unterwasserfahrzeuges unter Beachtung vorgegebener Kriterien.

Ein "Schallsender" ist insbesondere ein Gerät zum Senden von akustischen Unterwasserschallsignalen. Ein Schallsender wird insbesondere auch in einem aktiven Sonar eingesetzt. Der Schallsender wandelt ein elektrisches Signal in ein akustisches Signal um, wobei letzteres ausgesandt wird. Bei einem Schallsender kann es sich insbesondere auch um einen Responder handeln, welcher automatisch ein Antwortschallsignal sendet, und/oder um einen Transponder, welcher ein empfangenes Schallsignal aufnimmt und automatisch unverändert oder verändert weiterleitet.

Ein "seitlicher Abstand" ist ein Abstand vom Schallempfänger und/oder Schallsender des Unterwasserfahrzeuges zu einem, dem Begleitfahrzeug zugeordneten, Referenzpunkt, wobei der Referenzpunkt insbesondere steuerbord- oder backbordseitig im Bezug zu einer Längsachse des Begleitfahrzeuges angeordnet ist.

Ein "Referenzpunkt" (auch "Bezugspunkt") ist insbesondere ein spezieller Punkt, auf welchen sich die Ermittlung des seitlichen Abstandes bezieht. Bei dem Referenzpunkt kann es sich insbesondere um die seitliche Bordwand des Begleitfahrzeuges oder um die Position des Schallsenders und/oder eines Responders und/oder eines Transponders und/oder eines Reflektors am Begleitfahrzeug und/oder an einem länglichen Element an einer Haltevorrichtung des Begleitfahrzeuges handeln.

Die "Längsachse" ist insbesondere jene Achse des Begleitfahrzeuges, welche der Richtung seiner größten Ausdehnung entspricht. Insbesondere ist die Längsachse auch eine annähernde Symmetrieachse des Begleitfahrzeuges.

Ein "Zielabstand" ist insbesondere ein Abstand zum Ziel der Annäherung des Unterwasserfahrzeuges. Insbesondere ist der Zielabstand der einzuhaltende seitliche Abstand zu einem Referenzpunkt.

Die "Einholposition" sind insbesondere die Koordinaten des Punktes, an dem das Unterwasserfahrzeug vom Begleitfahrzeug eingeholt werden soll. Die Einholposition ist insbesondere durch den Zielabstand des Unterwasserfahrzeuges als seitlichen Abstand und der Koordinate in Richtung der Längsachse des Begleitfahrzeuges festgelegt, wobei diese Längskoordinate insbesondere durch die Position der Einholvorrichtung an Bord des Begleitfahrzeuges vorgegeben ist. Auch kann die längsseitige Koordinate insbesondere durch eine Markierung, beispielsweise durch einen Reflektor oder einen Schallsender dem Unterwasserfahrzeug angezeigt werden.

In einer weiteren Ausgestaltung des Verfahrens sendet der Schallsender des Begleitfahrzeuges oder des Unterwasserfahrzeuges ein zeitlich gepulstes Signal und/oder ein codiertes Signal aus.

Dadurch kann das ausgesendete Signal eindeutig dem Begleitfahrzeug oder dem Unterwasserfahrzeug zugeordnet werden und störende andere Signale können ausgeblendet und/oder unterdrückt werden.

Durch die Verwendung eines zeitlich gepulsten und/oder eines codierten Signales ist es ausreichend, dass das Unterwasserfahrzeug einen einzigen Schallempfänger aufweist, um beim Annähern das zeitlich gepulste und/oder codierte Signal zur Ermittlung des seitlichen Abstandes zu verwenden. Somit kann oder können die Laufzeit und/oder die Phasenverschiebung des ausgesandten und reflektierten Schallimpulses zur Ermittlung des Abstandes verwendet werden.

Folglich kann mit einem einzigen Sender und einem einzigen Empfänger eine Abstandsmessung durchgeführt und kontinuierlich wiederholt werden, sodass sich das Unterwasserfahrzeug der Einholposition annähern kann. Somit ist ein geringer Geräteaufwand erforderlich.

Ein "zeitlich gepulstes Signal" ist insbesondere ein Signal, welches nicht kontinuierlich sondern in regelmäßigen und/oder unregelmäßigen zeitlichen Abständen ausgesendet wird. Bei einem zeitlich gepulsten Signal können beispielsweise abgehackte Wellenstöße ausgesendet werden.

Ein "codiertes Signal" (auch "moduliertes Signal") ist insbesondere ein Signal, welches in einem gewünschten Frequenz moduliert und/oder andersartig verändert und ausgesendet wird. Insbesondere kann ein codiertes Signal auch zur Übermittlung von Nachrichten und/oder Informationen verwendet werden. Ein codiertes Signal kann insbesondere durch Modulation der Amplituden, des Pulses, der Trägerfrequenz und/oder der Phasenlage erzeugt werden.

Damit insbesondere eine Abstandsermittlung mittels Triangulation durchführbar ist, weist das Unterwasserfahrzeug zwei Schallempfänger auf und/oder ist dem Begleitfahrzeug ergänzend oder alternativ zu dem Schallsender ein Reflektor zugeordnet.

Somit kann ein vom Unterwasserfahrzeug ausgesendetes Schallsignal definiert an einem dem Begleitfahrzeug zugeordneten Reflektor reflektiert und vom Schallempfänger des Unterwasserfahrzeuges empfangen werden. Dadurch ist der Referenzpunkt definiert durch den Ort (Koordinaten) des Reflektors vorgegeben. Zudem kann der dem Begleitfahrzeug zugeordnete Reflektor und der dem Begleitfahrzeug zugeordnete Schallsender in einem Gerät vereint als Transponder oder Responder ausgestaltet sein, sodass ein vom Schallsender des Unterwasserfahrzeugs ausgesandtes Schallsignal von Transponder/Responder aufgenommen und direkt oder verändert wieder ausgesandt wird.

Es ist insbesondere vorteilhaft, dass gegenüber der Laufzeitmessung zur indirekten Entfernungsmessung zwischen zwei Punkten, eine Abstandermittlung mittels Triangulation verbessert werden kann. Dadurch ist eine genauere Ermittlung des seitlichen Abstandes möglich.

Somit kann die Abstandsmessung erfolgen durch genaue Winkelmessung innerhalb eines Dreiecks beschrieben durch einen Schallsender und einen Schallempfänger des Unterwasserfahrzeuges und einem Reflektor und/oder Sender (Transponder oder Responder) des Begleitfahrzeuges oder durch zwei Schallempfänger des Unterwasserfahrzeuges und ein Schallsender des Begleitfahrzeuges.

Eine "Triangulation" ist eine geometrische Methode der Abstandsmessung durch genaue Winkelmessung innerhalb von Dreiecken, wobei die Berechnung mittels trigonometrischer Funktionen erfolgt. Hierbei muss insbesondere der Abstand zwischen zwei Punkten bekannt sein, sodass Winkelmessungen zu beliebigen anderen Punkten im Raum erfolgen können, um deren Lage eindeutig zu bestimmen. Folglich wird die Messung des Abstandes durch Verwendung von mindestens drei Bezugspunkten verbessert.

In einer weiteren Ausgestaltung des Verfahrens weist das Unterwasserfahrzeug drei Schallempfänger oder vier Schallempfänger oder fünf Schallempfänger oder weitere Schallempfänger auf und/oder dem Begleitfahrzeug sind zwei Reflektoren oder drei Reflektoren oder vier Reflektoren oder fünf Reflektoren oder weitere Reflektoren zugeordnet.

Durch eine höhere Anzahl von Schallempfängern und/oder Reflektoren kann die Qualität der Abstandsmessung weiter verbessert werden. Durch mehrere Schallempfänger kann das ausgesendete Schallsignal und dessen Veränderung, bedingt durch die Fahrt des Unterwasserfahrzeuges bei der Annäherung, durch die an unterschiedlichen Positionen angeordneten Schallempfänger besser aufgelöst werden.

Mehrere Reflektoren können vorteilhaft zur Ausbildung eines Leitsystems verwendet werden, indem diese beabstandet angeordnet werden und das Unterwasserfahrzeug anhand der beabstandeten Reflektoren sowohl den Zielabstand einstellen als auch die Längskoordinate zur Einholposition anfahren kann.

Um zwei definierte Bezugspunkte mit bekanntem Abstand für die Triangulation zu haben und damit sich das Unterwasserfahrzeug längsseitig der Einholposition annähern kann, sind mindestens zwei Reflektoren in Richtung der Längsachse des Begleitfahrzeuges beabstandet, insbesondere auf einer gleichen Tiefe von einer gemittelten Wasseroberfläche, angeordnet.

Eine Anordnung der Reflektoren auf einer gleichen Tiefe von einer gemittelten Wasseroberfläche ist vorteilhaft, da sich die reflektierten Signale lediglich durch die Positionsänderung aufgrund einer Fahrt des Unterwasserfahrzeuges beim Annähern in Längsrichtung des Begleitfahrzeuges ändern, jedoch eine vertikale Veränderung nicht auftritt.

In einer weiteren Ausgestaltung des Verfahrens ist der Reflektor oder sind mehrere Reflektoren und/oder der Schallsender außen an einer Bordwand des Begleitfahrzeuges und/oder an einem länglichen Element im Wasser, welches an einer Haltevorrichtung des Begleitfahrzeuges angebracht ist, angeordnet.

Somit kann mittels des Reflektors oder mehrerer Reflektoren und/oder dem Schallsender ein Leitsystem aufgebaut werden, wodurch sich das Unterwasserfahrzeug in stabiler Fahrt unter Einhaltung des Zielabstandes der Einholposition nähern kann.

Besonders vorteilhaft ist es, wenn der Reflektor oder mehrere Reflektoren und/oder der Schallsender an einem länglichen Element, beispielsweise einem Seil, an einer Haltevorrichtung des Begleitfahrzeuges im Wasser dem Begleitfahrzeug nachgezogen wird oder werden, sodass sich dass Unterwasserfahrzeug von hinten der Heckseite des Begleitfahrzeuges annähern kann und den seitlichen Abstand zu dem Reflektor oder mehreren Reflektoren und/oder dem Schallsender an dem länglichen Element beim Annähern hält.

Bei diesen Anordnungen des Reflektors oder mehrerer Reflektoren und/oder des Schallsenders kann sich das Unterwasserfahrzeug wahlweise zu einer backbord- und/oder steuerbordseitigen Einholposition und/oder dem Heck oder einer Position seitlich vom Heck des Begleitfahrzeuges annähern. Zudem kann durch eine Steuerung oder eine Regelung das Unterwasserfahrzeug stabilisiert werde, sodass ein "Schlingern" minimiert oder verhindert wird.

Ein "längliches Element" ist insbesondere ein längliches und/oder biegeschlaffes und/oder elastisches Element, insbesondere zur Übertragung von Zugkräften. Bei einem länglichen Element kann es sich insbesondere um ein Seil, ein Tragseil, ein Tragelement, ein Metallgeflecht, eine Kette und/oder um ein Drahtseil handeln. Das längliche Element kann insbesondere Natur- und/oder Kunstfasern und/oder Metalldraht aufweisen. Vorteilhaft ist das längliche Element unter Zug dehnungsarm, sodass die Positionen und/oder die Abstände der Reflektoren und/oder des Schallsenders konstant bleiben.

Damit das Unterwasserfahrzeug das längsseitige Erreichen der Einholposition erkennen kann, markiert im Falle eines Versatzes in Richtung der Längsachse des Begleitfahrzeuges bei Fortbewegen des Unterwasserfahrzeuges parallel zur Richtung der Längsachse des Begleitfahrzeuges einer der Reflektoren oder der Schallsender des Begleitfahrzeuges das Erreichen der Einholposition des Unterwasserfahrzeuges.

Das längsseitige Erreichen der Einholposition kann beispielsweise durch ein zeitgepulstes und/oder codiertes ausgesandtes Signal angezeigt werden oder durch einen zunehmend geringeren Abstand der Reflektoren, wobei an der längsseitigen Einholposition beispielsweise zwei Reflektoren direkt nebeneinander angeordnet sind. Ebenso kann das Markieren der längsseitigen Einholposition durch einen andersartigen Reflektor, beispielsweise durch eine größere Reflektorfläche oder eine andere Reflektor-oberfläche als bei den vorhergehenden Reflektoren, erfolgen.

Zudem wird durch die Markierung dem Unterwasserfahrzeug angezeigt, dass es jetzt nur noch die erreichte Einholposition bis zum Einholen halten muss.

Durch die längsseitige Markierung und Messung des Zielabstandes kann das Unterwasserfahrzeug eine sehr stabile Lage an der Einholposition halten, wodurch ein sicheres Einholen durch eine Einholvorrichtung des Begleitfahrzeuges ermöglicht wird.

In einer weiteren Ausgestaltung des Verfahrens fährt das Unterwasserfahrzeug nach Erreichen der Einholposition auf oder an eine Einholvorrichtung des Begleitfahrzeuges.

Dadurch, dass das Unterwasserfahrzeug unter Einhaltung seiner stabilen Lage aktiv an oder auf eine Einholvorrichtung fährt, wird ein sicheres Einholen ohne Gefahr der Beschädigung des Unterwasserfahrzeuges und/oder des Begleitfahrzeuges ermöglicht. Beispielsweise kann das Unterwasserfahrzeug heckseitig auf eine herabgelassene Rampe des Begleitfahrzeuges fahren. Ebenso kann das Unterwasserfahrzeug in einem Tragekäfig fahren, welcher bevorzugt ebenfalls mit Reflektoren ausgestaltet ist, und anschließend durch eine Lasthebeanlage an Bord des Begleitfahrzeuges gebracht werden.

Eine "Einholvorrichtung" ist insbesondere eine Vorrichtung, mit der ein Unterwasserfahrzeug an Bord eines Begleitfahrzeuges eingeholt und/oder ins Wasser ausgesetzt wird. Bei einer Einholeinrichtung handelt es sich insbesondere um eine Lasthebeanlage, einen schwenkbaren Ausleger, einen Kran und/oder eine Winde unter Verwendung eines Tragekäfigs, Hakens und/oder Tragerahmens und/oder um eine Rampe.

Selbstverständlich kann das zuvor beschriebene Verfahren auch beim Ausbringen (Aussetzen) eines Unterwasserfahrzeuges vom Bord eines Begleitfahrzeuges ins Wasser genutzt werden, da das Unterwasserfahrzeug, sobald es im Wassert ist, sich in einen definierten Zielabstand vom Begleitfahrzeug bringen und eine stabile Lage im Wasser einnehmen kann. Dadurch wird die Gefahr der Kollision des Unterwasserfahrzeuges mit dem Begleitfahrzeug, insbesondere bei starkem Wellengang und/oder starkem Wind, vermindert. Zudem kann beim Aussetzen das Unterwasserfahrzeug die Reflektoren an der Bordwand und/oder an dem länglichen Element im Wasser des Begleitfahrzeuges nutzen, um sich von dem Begleitfahrzeug zu entfernen.

In einem weiteren Aspekt wird die Aufgabe gelöst durch ein Begleitfahrzeug, welches eine Einholvorrichtung und mindestens einen Reflektor oder einen Schallsender aufweist und dem ein Unterwasserfahrzeug mit mindestens einem Schallempfänger, einer Navigationseinheit und/oder einem Schallsender zuordenbar ist, wobei das Begleitfahrzeug derart eingerichtet ist, dass mittels des Begleitfahrzeuges ein zuvor beschriebenes Verfahren durchführbar ist.

Dadurch wird ein Begleitfahrzeug bereitgestellt, welches eine sichere Annäherung eines Unterwasserfahrzeugs an eine Einholposition und somit ein sicheres Einholen des Unterwasserfahrzeuges gewährleistet.

Besonders vorteilhaft ist, dass das Begleitfahrzeug so ausgestaltet ist, dass verschiedene Unterwasserfahrzeuge sich zeitgleich oder nacheinander annähern und sichern eingeholt werden können.

In einer weiteren Ausführungsform des Begleitfahrzeuges weist das Begleitfahrzeug einen Reflektor oder mehrere Reflektoren und/oder einen Schallsender außen an einer Bordwand und/oder an einem länglichen Element im Wasser auf, wobei das längliche Element an einer Haltevorrichtung des Begleitfahrzeuges angebracht ist und die Haltevorrichtung seitlich versetzt von der Längsachse des Begleitfahrzeuges steuerbord- oder backbordseitig angeordnet ist, sodass bei einer Fahrt des Begleitfahrzeuges das längliche Element oberflächennah und begleitfahrzeugnah im Wassert seitlich von und/oder hinter dem Begleitfahrzeug gezogen wird und das Unterwasserfahrzeug zu einer stabilen Einholposition geleitbar ist.

Dadurch kann das Begleitfahrzeug ein Unterwasser-fahrzeug bereits im größeren Abstand für eine seitliche und/oder heckseitige Annäherung zu einer stabilen Einholposition leiten.

In einem weiteren Aspekt der Erfindung wird die Aufgabe gelöst durch eine Fahrzeugkombination, welche ein zuvor beschriebenes Begleitfahrzeug und ein Unterwasserfahrzeug mit mindestens einem Schallempfänger, einer Navigationseinheit und/oder einen Schallsender aufweist, wobei mittels der Fahrzeugkombination ein Verfahren wie zuvor beschrieben durchführbar ist.

Dadurch wird eine Fahrzeugkombination bereitgestellt, bei der sich ein Unterwasserfahrzeug selbsttätig und sicher einer stabilen Einholposition am Begleitfahrzeug annähern kann und sicher ohne Beschädigung der Fahrzeugkombination das Unterwasserfahrzeug vom Begleitfahrzeug eingeholt werden kann.

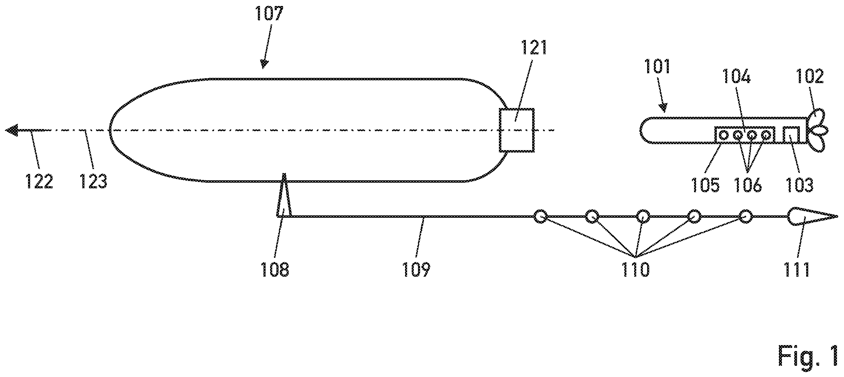

Im Weiteren wird die Erfindung anhand von Ausführungsbeispielen näher erläutert. Es zeigen
- Figur 1: eine stark schematische Darstellung in Draufsicht eines Versorgungsschiffes mit einem Ausleger, Seil und Reflektoren und einem autonomen Unterwasserfahrzeug, und

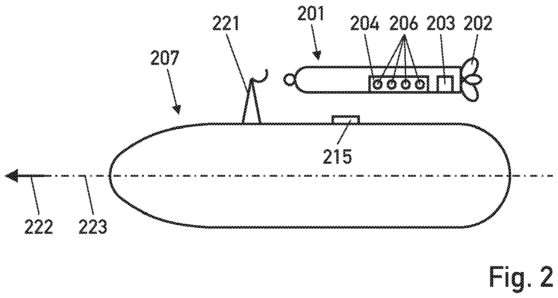

- Figur 2: eine stark schematische Darstellung in Draufsicht eines Trägerschiffes mit einem Schallsender und ein autonomes Unterwasserfahrzeug.

Ein Versorgungsschiff 107 weist an seinem Heck eine Einholrampe 121 auf. Auf der Backbordseite weist das Versorgungsschiff 107 einen Ausleger 108 auf, an dem ein Seil 109 oberflächennah und versorgungsschiffnah ins Wasser gelassen ist. Das Seil 109 ist parallel zur Längsachse 123des Versorgungsschiffes 107 und der Fahrtrichtung des Versorgungsschiffes 122 ausgerichtet. Das Seil 109 weist in Längsrichtung auf Höhe des Endes der Einholrampe 121 beginnend fünf Reflektoren 110 entlang des Seils 109 auf. Die Reflektoren 110 sind gleich beabstandet. Am Ende des Seils 109 ist eine Stabilisierungsflosse 111 angeordnet.

Heckseitig hinter dem Versorgungsschiff 107 ist ein autonomes Unterwasserfahrzeug (AUV) 101 im Wasser angeordnet. Das autonome Unterwasserfahrzeug 101 weist einen Propeller 102, eine Navigationseinheit 103, ein aktives Sonar 104 mit einem Schallsender 105 und drei Hydrofone 106 auf.

Das Versorgungsschiff 107 fährt in einer Fahrtrichtung 122, welche mit der Längsachse des Versorgungsschiffes 123 zusammenfällt. Über den Ausleger 108 ist das Seil 109 versorgungsschiffnah und oberflächennah ins Wasser gelassen und wird hinter dem Versorgungsschiff 107 gezogen. Durch die Stabilisierungsflosse 111 am Ende des Seils 109 ist das Seil 109 straff gespannt, sodass die Reflektoren 110 in gleichem vordefinierten Abstand und stabilen Positionen angeordnet sind.

Das autonome Unterwasserfahrzeug 101 fährt ebenfalls in Fahrtrichtung des Versorgungsschiffes 122 angetrieben durch den Propeller 102 hinter dem Heck des Versorgungsschiffes 107. Das autonome Unterwasserfahrzeug 101 sendet ein Schallsignal mittels des Schallsenders 105 aus. Das ausgesendete Schallsignal wird an den Reflektoren 110 reflektiert und von den drei Hydrofonen 106 des Unterwasserfahrzeuges empfangen. Anhand der empfangenen Wasserschallsignale ermittelt das Unterwasserfahrzeug 101 mittels der Navigationseinheit 103 den aktuellen seitlichen Abstand im Winkel von 90° zu dem Seil 109.

Aufgrund von kontinuierlichen Wasserschallmessungen und Ermittlungen des aktuellen seitlichen Abstandes zum Seil 109 nähert sich das autonome Unterwasserfahrzeug 101 in einem stabilen vorgegebenen Abstand dem Versorgungsschiff 107 an. Durch die Fahrt und die ständige Abstandskontrolle nimmt das autonome Unterwasserfahrzeug 101 bei der Annäherung an das Versorgungsschiff 107 eine sehr stabile Lage im Wasser gegenüber dem Versorgungsschiff 107 ein. Der vorgegebene stabile Abstand ist derart eingestellt, dass das autonome Unterwasserfahrzeug 101 sich genau in der Längsachse des Versorgungsschiffes 123 dem Versorgungsschiff 107 sicher ohne eine Störung durch die Heckwelle des Versorgungsschiffes 107 annähert.

Der dem Ausleger 108 am nächsten liegende Reflektor 110 auf längsseitiger Höhe des Endes der Einholrampe 121 markiert durch seine Oberflächenbeschaffenheit dem autonomen Unterwasserfahrzeug 101 das Erreichen der Einholposition. Nach Erreichen der Einholposition hält das autonome Unterwasserfahrzeug 101 kurzzeitig diese Einholposition und fährt dann auf die ins Wasser gelassene Einholrampe 121 auf, sodass das autonome Unterwasserfahrzeug 101 mittel der Einholrampe 121 an Bord des Versorgungsschiffes 107 geholt wird.

In einer Alternative weist ein Trägerschiff 207 einen Einholkran 221 auf. Das Trägerschiff 207 weist steuerbordseitig einen Schallsender 215 auf. Auf der Steuerbordseite des Trägerschiffes 207 ist ein autonomes Unterwasserfahrzeug 201 angeordnet. Das autonome Unterwasserfahrzeug 201 weist einen Propeller 202, eine Navigationseinheit 203, ein passives Sonar 204 und vier Hydrofone 206 auf.

Das Trägerschiff 207 fährt in Fahrtrichtung 222, welche mit der Längsachse des Trägerschiffes 223 zusammenfällt. Das autonome Unterwasserfahrzeug 201 fährt angetrieben vom Propeller 202 steuerbordseitig vom Trägerschiff 207 ebenfalls in Fahrtrichtung 222.

Mittels des Schallsenders 215 sendet das Trägerschiff 207 in zeitlichen Anständen ein gepulstes Schallsignal aus. Das gepulste Schallsignal wird von den vier Hydrofonen des passiven Sonars 204 des autonomen Unterwasserfahrzeuges 201 empfangen und aufgrund von Laufzeitmessungen zur Ermittlung des Abstandes zwischen den Hydrofonen des autonomen Unterwasserfahrzeuges 201 und dem Schallsender 215 des Trägerschiffes 207 verwendet. Anhand der Veränderung des gepulsten ausgesendeten Schallsignals erkennt die Navigationseinheit 203 das Erreichen der stabilen Einholposition. Das autonome Unterwasserfahrzeug 201 hält die stabile Einholposition, bis es vom Einholkran 221 mit einem Haken aufgenommen und an Bord des Trägerschiffes 207 gebracht wird.

### Bezugszeichenliste

- 101: Autonomes Unterwasserfahrzeug (AUV)
- 102: Propeller
- 103: Navigationseinheit
- 104: aktives Sonar
- 105: Schallsender
- 106: Hydrofone
- 107: Versorgungsschiff
- 108: Ausleger
- 109: Seil
- 110: Reflektoren
- 111: Stabilisierungsflosse
- 121: Einholrampe
- 122: Fahrtrichtung des Versorgungsschiffes
- 123: Längsachse des Versorgungsschiffes
- 201: Autonomes Unterwasserfahrzeug (AUV)
- 202: Propeller
- 203: Navigationseinheit
- 204: passives Sonar
- 206: Hydrofone
- 207: Trägerschiff
- 215: Schallsender
- 221: Einholkran
- 222: Fahrtrichtung des Trägerschiffes
- 223: Längsachse des Trägerschiffes

## Patentansprüche

1. Verfahren zum Einholen eines Unterwasserfahrzeuges (101, 201) mittels eines sich in Fahrt befindenden Begleitfahrzeuges (107, 207), wobei das Unterwasserfahrzeug einen Schallempfänger (106, 206) und eine Navigationseinheit (103, 203) aufweist und dem Begleitfahrzeug ein Schallsender (215) zugeordnet ist oder das Unterwasserfahrzeug einen Schallsender (105) aufweist, wobei
- ein Schallsignal von dem Schallsender ausgesendet wird,
- das Unterwasserfahrzeug mittels des Schallempfängers das ausgesendete Schallsignal empfängt,
- das Unterwasserfahrzeug anhand des empfangenen Schallsignals einen aktuellen seitlichen Abstand zu einem Referenzpunkt ermittelt, welcher dem Begleitfahrzeug eindeutig zuordenbar ist, wobei der Referenzpunkt steuerbord- oder backbordseitig in Bezug zu einer Längsachse des Begleitfahrzeug angeordnet ist,
- das Unterwasserfahrzeug eine Abweichung von dem ermittelten aktuellen seitlichen Abstand zu einem Zielabstand ermittelt,
- das Unterwasserfahrzeug sich mittels der Navigationseinheit anhand der ermittelten Abweichung dem Zielabstand annähert und
- nach Erreichen des Zielabstandes das Unterwasserfahrzeug den Zielabstand hält und im Falle eines Versatzes in Richtung der Längsachse des Begleitfahrzeuges (123, 223) sich parallel zur Richtung der Längsachse des Begleitfahrzeuges bis zum Erreichen einer Einholposition fortbewegt, sodass bei dem Unterwasserfahrzeug exakt ein Annähern an die Einholposition und ein Halten der erreichten Einholposition kontrollierbar und korrigierbar ist.

2. Verfahren nach Anspruch 1, **dadurch gekennzeichnet, dass** der Schallsender des Begleitfahrzeuges oder des Unterwasserfahrzeuges ein zeitlich gepulstes Signal und/oder ein codiertes Signal aussendet.

3. Verfahren nach einem der vorherigen Ansprüche, **dadurch gekennzeichnet, dass** das Unterwasserfahrzeug zwei Schallempfänger aufweist und/oder dem Begleitfahrzeug ergänzend oder alternativ zu dem Schallsender ein Reflektor zugeordnet ist, sodass eine Abstandsermittlung mittels Triangulation durchführbar ist.

4. Verfahren nach Anspruch 3, **dadurch gekennzeichnet, dass** das Unterwasserfahrzeug drei Schallempfänger oder vier Schallempfänger oder fünf Schallempfänger oder weitere Schallempfänger aufweist und/oder dem Begleitfahrzeug zwei Reflektoren oder drei Reflektoren oder vier Reflektoren oder fünf Reflektoren oder weitere Reflektoren zugeordnet sind.

5. Verfahren nach Anspruch 4, **dadurch gekennzeichnet, dass** mindestens zwei Reflektoren in Richtung der Längsachse des Begleitfahrzeuges beabstandet, insbesondere auf einer gleichen Tiefe von einer gemittelten Wasseroberfläche, angeordnet sind.

6. Verfahren nach einem der vorherigen Ansprüche, **dadurch gekennzeichnet, dass** der Reflektor oder mehrere Reflektoren und/oder der Schallsender außen an einer Bordwand des Begleitfahrzeuges und/oder an einem länglichen Element im Wasser, welches an einer Haltevorrichtung des Begleitfahrzeuges angebracht ist, angeordnet ist oder sind.

7. Verfahren nach einem der vorherigen Ansprüche, **dadurch gekennzeichnet, dass** im Falle eines Versatzes in Richtung der Längsachse des Begleitfahrzeuges bei Fortbewegen des Unterwasserfahrzeuges parallel zur Richtung der Längsachse des Begleitfahrzeuges einer der Reflektoren oder der Schallsender des Begleitfahrzeuges das Erreichen der Einholposition des Unterwasserfahrzeuges markiert.

8. Verfahren nach einem der vorherigen Ansprüche, **dadurch gekennzeichnet, dass** nach Erreichen der Einholposition das Unterwasserfahrzeug auf oder an eine Einholvorrichtung (121, 221) des Begleitfahrzeuges fährt.

9. Begleitfahrzeug, welches eine Einholvorrichtung und mindestens einen Reflektor oder einen Schallsender aufweist und dem ein Unterwasserfahrzeug mit mindestens einem Schallempfänger, einer Navigationseinheit und/oder einem Schallsender zuordenbar ist, **dadurch gekennzeichnet, dass** das Begleitfahrzeug mehrere Reflektoren außen an einer Bordwand und/oder an einem länglichen Element im Wasser aufweist, wobei das längliche Element an einer Haltevorrichtung des Begleitfahrzeuges angebracht ist und die Haltvorrichtung seitlich versetzt von der Längsachse des Begleitfahrzeuges steuerbord- oder backbordseitig angeordnet ist, sodass bei einer Fahrt des Begleitfahrzeuges das längliche Element oberflächennah und begleitfahrzeugnah im Wasser seitlich von und/oder hinter dem Begleitfahrzeug gezogen wird und das Unterwasserfahrzeug zu einer stabilen Einholposition leitbar ist.

10. Fahrzeugkombination, welche ein Begleitfahrzeug nach Anspruch 9 und ein Unterwasserfahrzeug mit mindestens einem Schallempfänger, einer Navigationseinheit und/oder einem Schallsender aufweist, **dadurch gekennzeichnet, dass** mittels der Fahrzeugkombination ein Verfahren nach einem der Ansprüche 1 bis 8 durchführbar ist.

## Claims

1. Method for retrieving an underwater vehicle (101, 201) by means of a moving escort vehicle (107, 207), wherein
the underwater vehicle has a sound receiver (106, 206) and a navigation unit (103, 203), and a sound transmitter (215) is assigned to the escort vehicle, or the underwater vehicle has a sound transmitter (105), wherein
- a sound signal is emitted by the sound transmitter,
- the underwater vehicle receives the emitted sound signal by means of the sound receiver,
- the underwater vehicle determines, on the basis of the received sound signal, a current lateral distance to a reference point which can be uniquely assigned to the escort vehicle, wherein the reference point is arranged on the starboard or port side with respect to a longitudinal axis of the escort vehicle,
- the underwater vehicle determines a deviation from the determined current lateral distance to a target distance,
- the underwater vehicle approaches the target distance by means of the navigation unit on the basis of the determined deviation, and
- after reaching the target distance, the underwater vehicle maintains the target distance and, in the event of an offset in the direction of the longitudinal axis of the escort vehicle (123, 223), moves along parallel to the direction of the longitudinal axis of the escort vehicle until reaching a retrieval position, with the result that approach of the retrieval position and maintenance of the retrieval position which has been reached can be checked and corrected accurately in the underwater vehicle.

2. Method according to Claim 1, **characterized in that** the sound transmitter of the escort vehicle or of the underwater vehicle emits a temporally pulsed signal and/or a coded signal.

3. Method according to one of the preceding claims, **characterized in that** the underwater vehicle has two sound receivers and/or a reflector is assigned to the escort vehicle in addition or as an alternative to the sound transmitter, with the result that a distance can be determined using triangulation.

4. Method according to Claim 3, **characterized in that** the underwater vehicle has three sound receivers or four sound receivers or five sound receivers or further sound receivers, and/or two reflectors or three reflectors or four reflectors or five reflectors or further reflectors are assigned to the escort vehicle.

5. Method according to Claim 4, **characterized in that** at least two reflectors are arranged in the direction of the longitudinal axis of the escort vehicle in a manner spaced apart, in particular at the same depth from an averaged water surface.

6. Method according to one of the preceding claims, **characterized in that** the reflector or a plurality of reflectors and/or the sound transmitter is/are arranged on the outside of a side plate of the escort vehicle and/or on an elongated element in the water which is fitted to a holding apparatus of the escort vehicle.

7. Method according to one of the preceding claims, **characterized in that,** in the event of an offset in the direction of the longitudinal axis of the escort vehicle as the underwater vehicle moves along parallel to the direction of the longitudinal axis of the escort vehicle, one of the reflectors or sound transmitters of the escort vehicle marks when the retrieval position of the underwater vehicle has been reached.

8. Method according to one of the preceding claims, **characterized in that,** after reaching the retrieval position, the underwater vehicle moves onto or into a retrieving apparatus (121, 221) of the escort vehicle.

9. Escort vehicle which has a retrieving apparatus and at least one reflector or a sound transmitter and to which an underwater vehicle having at least one sound receiver, a navigation unit and/or a sound transmitter can be assigned, **characterized in that** the escort vehicle has a plurality of reflectors on the outside of a side plate and/or on an elongated element in the water, wherein the elongated element is fitted to a holding apparatus of the escort vehicle, and the holding apparatus is arranged on the starboard or port side in a manner laterally offset from the longitudinal axis of the escort vehicle, with the result that, when the escort vehicle moves, the elongated element is pulled in the water to the side of and/or behind the escort vehicle close to the surface and close to the escort vehicle and the underwater vehicle can be guided to a stable retrieval position.

10. Vehicle combination having an escort vehicle according to Claim 9 and an underwater vehicle having at least one sound receiver, a navigation unit and/or a sound transmitter, **characterized in that** a method according to one of Claims 1 to 8 can be carried out using the vehicle combination.

## Revendications

1. Procédé de récupération d'un véhicule sous-marin (101, 201) au moyen d'un véhicule de soutien en mouvement (107, 207), dans lequel le véhicule sous-marin comporte un récepteur de son (106, 206) et une unité de navigation (103, 203) et le véhicule de soutien se voit attribuer un émetteur de son (215) ou le véhicule sous-marin comporte un émetteur de son (105), dans lequel
- un signal acoustique est émis par l'émetteur de son,
- le véhicule sous-marin reçoit au moyen du récepteur de son le signal acoustique émis,
- le véhicule sous-marin détermine à l'aide du signal acoustique reçu une distance latérale actuelle par rapport à un point de référence qui peut être attribué de manière univoque au véhicule de soutien, le point de référence étant disposé à tribord ou à bâbord par rapport à un axe longitudinal du véhicule de soutien,
- le véhicule sous-marin détermine un écart de la distance latérale actuelle déterminée par rapport à une distance cible,
- le véhicule sous-marin s'approche de la distance cible au moyen de l'unité de navigation selon l'écart déterminé, et
- une fois la distance cible atteinte, le véhicule sous-marin maintient la distance cible, et en cas de décalage en direction de l'axe longitudinal du véhicule de soutien (123, 223), il se déplace en parallèle à la direction de l'axe longitudinal du véhicule de soutien jusqu'à atteindre une position de récupération de sorte qu'au niveau du véhicule sous-marin, une approche de la position de récupération et un maintien de la position de récupération atteinte peuvent être contrôlés et corrigés exactement.

2. Procédé selon la revendication 1, **caractérisé en ce que** l'émetteur de son du véhicule de soutien ou du véhicule sous-marin émet un signal cadencé et/ou un signal codé.

3. Procédé selon l'une quelconque des revendications précédentes, **caractérisé en ce que** le véhicule sous-marin comporte deux récepteurs de son et/ou le véhicule de soutien se voit attribuer un réflecteur, en complément ou en variante à l'émetteur de son, de sorte qu'une détermination de distance peut être réalisée au moyen d'une triangulation.

4. Procédé selon la revendication 3, **caractérisé en ce que** le véhicule sous-marin comporte trois récepteurs de son ou quatre récepteurs de son ou cinq récepteurs de son ou des récepteurs de son supplémentaires et/ou le véhicule de soutien se voit attribuer deux réflecteurs ou trois réflecteurs ou quatre réflecteurs ou cinq réflecteurs ou des réflecteurs supplémentaires.

5. Procédé selon la revendication 4, **caractérisé en ce qu'**au moins deux réflecteurs sont disposés en direction de l'axe longitudinal du véhicule de soutien, en particulier à une même profondeur à partir d'une surface de l'eau moyenne.

6. Procédé selon l'une quelconque des revendications précédentes, **caractérisé en ce que** le réflecteur ou plusieurs réflecteurs et/ou l'émetteur de son est/sont disposé(s) à l'extérieur sur un bordage du véhicule de soutien et/ou sur un élément oblong dans l'eau attaché à un dispositif de fixation du véhicule de soutien.

7. Procédé selon l'une quelconque des revendications précédentes, **caractérisé en ce qu'**en cas de décalage en direction de l'axe longitudinal du véhicule de soutien lors du déplacement du véhicule sous-marin en parallèle à la direction du véhicule de soutien, l'un des réflecteurs ou l'émetteur de son du véhicule de soutien marque l'arrivée à la position de récupération du véhicule sous-marin.

8. Procédé selon l'une quelconque des revendications précédentes, **caractérisé en ce qu'**une fois la position de récupération atteinte, le véhicule sous-marin monte sur ou s'approche d'un dispositif de récupération (121, 221) du véhicule de soutien.

9. Véhicule de soutien, comprenant un dispositif de récupération et au moins un réflecteur ou un émetteur de son et auquel peut être attribué un véhicule sous-marin avec au moins un récepteur de son, une unité de navigation et/ou un émetteur de son, **caractérisé en ce que** le véhicule de soutien comporte plusieurs réflecteurs à l'extérieur sur un bordage et/ou sur un élément oblong dans l'eau, l'élément oblong étant attaché à un dispositif de fixation du véhicule de soutien et le dispositif de fixation étant disposé à tribord ou à bâbord de manière latéralement décalée par rapport à l'axe longitudinal du véhicule de soutien, de sorte que lorsque le véhicule de soutien est en mouvement, l'élément oblong est remorqué dans l'eau près de la surface et près du véhicule de soutien latéralement par rapport au véhicule de soutien et/ou derrière celui-ci, et le véhicule sous-marin peut être guidé jusqu'à une position de récupération stable.

10. Combinaison de véhicules comportant un véhicule de soutien selon la revendication 9 et un véhicule sous-marin avec au moins un récepteur de son, une unité de navigation et/ou un émetteur de son, **caractérisée en ce que** la combinaison de véhicules permet d'effectuer un procédé selon l'une quelconque des revendications 1 à 8 .
